(19) Europäisches Patentamt
European Patent Office
Office européen des brevets

(11) **EP 2 854 299 B1**

(12) **EUROPEAN PATENT SPECIFICATION**

(45) Date of publication and mention
of the grant of the patent:
**12.07.2017 Bulletin 2017/28**

(51) Int Cl.:
*H04B 3/46* (2015.01)          *H04M 3/30* (2006.01)

(21) Application number: **13306305.7**

(22) Date of filing: **25.09.2013**

(54) **Method and device for analyzing a communication line**

Verfahren und Vorrichtung zur Analyse einer Kommunikationsleitung

Procédé et dispositif pour l'analyse d'une ligne de communication

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.04.2015 Bulletin 2015/14**

(73) Proprietor: **ALCATEL LUCENT
92100 Boulogne-Billancourt (FR)**

(72) Inventors:
• **Drooghaag, Benoit
2018 Antwerp (BE)**
• **Dardenne, Xavier
2018 Antwerp (BE)**

(74) Representative: **ALU Antw Patent Attorneys
Copernicuslaan 50
2018 Antwerpen (BE)**

(56) References cited:
**WO-A1-01/24492     US-B1- 6 970 560**

EP 2 854 299 B1

## Description

### Field of the invention

The present invention refers to a method and a device for analyzing a communication line. The present invention further refers to a monitoring station comprising such a device and a computer program product programmed for executing such a method.

### Background

With the increasing deployment of IPTV solutions, video-on-demand offers or triple-play services, both the system performance and the customer support becomes more and more exigent, particularly on digital subscriber lines (DSL). Disturbances or impairments on a digital subscriber line may heavily impact the bit rate on a physical access link provided by the digital subscriber line. A decrease of the bit rate would adversely impact the quality of service of the above-mentioned high bit rate services. Hence, it is of prime importance to be able to remotely diagnose reasons of the disturbances and impairments and take actions to improve the performance of the link, in particular to increase the bit rate. Automatic evaluating the performance of digital subscriber lines and taking action to resolve problems on the physical links provided by these lines is also referred to as Dynamic Line Management (DLM). Applying dynamic line management on a wire line access network helps the operators of the network to gain in service quality as well as to save money and time by not involving human interventions for all and every type of request that may occur in case of disturbances and impairments in the wire line access network.

In order to be able to react adequately and quickly to an occurrence of an impairment at a certain communication line, it is important to determine the type of the impairment. By knowing the type of the impairment, its cause can be isolated and eliminated.

One type of impairment that may be present in a communication medium such as a communication line, e. g. a twisted pair DSL, is a bridged-tap (un-terminated loop segment connected to a main section of the communication line). Such a type of impairment directly impacts the communication channel provided by the communication line and limits the performance of the communication line by creating local minima (so-called "dips") in a transfer function of the channel. Bridged-taps are often present when a twisted-pair or any other type of communication line has been reassigned to another customer or when it has been connected to a new access node (e. g. DSL access multiplexer, DSLAM) in a central office (CO), a remote cabinet or alike. Sometimes, bad wirings inside customer's premises can also create bridged-taps and reduce the performance of data transmission over the communication line.

Another common type of impairment impacting the transmission performance of a communication line is Radio Frequency Interferences (RFI). Radio frequency interferences are typically originating from radio stations (in particular long waves or medium waves radio bands, that are overlapping with the spectrum of signals transmitted over the communication lines). In particular, when using high bandwidth transmission schemes like VDSL2, there is also an overlapping with the short-waves radio band. Moreover, radio frequency interference may be caused by Power Supply Units (PSUs) of many electronic devices used at home, in office buildings or in an industrial environment. Today's power supply units typically comprise switched converters that may operate at a switching frequency in the same range as the signal transmitted over the communication lines. The switching converters are known to be a common source of interference and it has already been observed that interference are easily coupled into an in-house cabling network comprising the communication line (usually untwisted, low category cables like classical telephone wires) and therefore degrade the data transmission performance of the communication line. Moreover, it has been observed that the radio frequency interferences can even come from power supply units of devices that are part of the customer premises equipment itself, like the power supply unit of a DSL modem.

If the network operator knows the type of impairment, it can more easily be removed. For example, in case of a bridged-tap, the communication line has been inspected for un-terminated segments. However, in case of radio frequency interferences, the environments of the line, in particular a section of the line residing within the in-house cabling, needs to be checked for the presence of disturbing electronic or electrical devices.

It is known to detect impairments by analyzing a measured transfer function of the communication line. The transfer function, being represented in a logarithmic scale in typical DSL systems, is also known as Hlog. However, existing DSL systems measure the transfer function only during an initialization phase while a communication between a DSL modem installed at the customer premises equipment (CPE) and a modem of the access node is set up. As a consequence, the measured transfer function is not updated while operating the communication line. In some cases, the transfer function is determined by a DSL modem, but can only be retrieved while the communication line is in the initialization phase. In this case, the transfer function is not available after the end of the initialization phase. Thus, determining an up-to-date version of the measured transfer function Hlog requires forcing a resynchronization of the two modem circuitries connected to the two ends of the communication line, which results in a service interruption of a few tens of seconds.

Another approach to determine the type of an impairment is to use reflectometry based tests like single-ended line tests (SELT). However, with the existing DSL systems, a SELT requires to interrupt the service on the communication line and a test during a few minutes. Such a long interruption is usually not tolerated by the customer and SELT is therefore reserved for severe problems including an already existing service interruption.

Known approaches for detecting radio frequency interferences are base on analyzing a Quiet Line Noise (QLN) of the communication line. However, the quite line noise is measured during the initialization phase of the line only. As consequence, up-to-date values of the quiet line noise are not available after the line has completed the initialization phase.

The published patent application WO 01/24492 A1 discloses a method for testing a subscriber line based on an auxiliary variable representing a property of the line.

In US 6,970,560 B1, a method and apparatus for impairment diagnosis in communication systems are disclosed. This method uses a Bayesian Belief Network for defining a probabilistic cause-effect relationship.

**Summary**

The object of the present invention is to provide a method and device for analyzing a communication line that allows for determining a type of an impairment using information that can be retrieved from a network element of an access network including the communication line without interrupting a communication service provided over the communication line.

This object is solved by a method according to claim 1 and a device according to claim 12. Furthermore, a monitoring station according to claim 14 and a computer program product according to claim 15 are provided.

According to an embodiment of the invention, a method for analyzing a communication line is provided, the method comprising determining a measured value of a frequency dependent parameter that describes transmission characteristics of the communication line; detecting at least one local extremum of the measured value; and classifying the at least one local extremum; wherein the classifying comprises assigning a type of impairment of the communication line to the local extremum based on comparing the measured value of the frequency dependent parameter with at least one estimated value of the parameter, wherein the estimated value is determined based on a mathematical model of the parameter, the mathematical model assuming the presence of a predefined type of impairment of the communication line.

The measured frequency dependent value of the frequency dependent parameter can be retrieved from network elements connected to the communication line at any time during the operation of the line and are therefore always up to date. However, impairments have an influence of the value of the parameter regardless of their type. Therefore, it appears difficult to determine the type of impairment by analyzing this single parameter only. Known approaches are based on picking exactly that type of parameter that is affected by a certain type of impairment in order to check the type of the impairment. For example, a bridged-tap affects the transfer function, whereas radio frequency interferences impact the quiet line noise QLN. The inventors have realized that the local extrema of the frequency dependent parameter can be assigned to a certain type of impairment by comparing the parameter with a mathematical model of the parameter. The mathematical model assumes a certain type of impairment to be present in the communication line or at the communication line. The method and device described herein can determine the type of impairment based on a single measured frequency dependent parameter only.

In an embodiment, the measured value describes a signal to noise ratio of the communication line. Accordingly, the at least one local extremum may be a local minimum - also referred to as "dip" - of the measured value. The signal to noise ratio can easily be retrieved from modem circuitry connected to a network side end or customer side end of the communication line, in particular when using a DSL system like ASDLx or VDSL2. Moreover, the signal to noise ratio is also available in other communication systems like Power Line Communication (PLC) system. Thus, the method may also be applied in connection with these other systems. That is, the communication line may be of any type, including a PLC line. However, in a preferred embodiment, the communication line is a DSL. The invention is not limited to using the signal to noise ratio as the frequency dependent parameter. For example, in another embodiment, the frequency dependent parameter may be the bitloading, i.e. the number of bits loaded on each carrier of a multi-carrier modulation system used on the communication line.

In an embodiment, the classifying comprises calculating an error metric, the error metric quantifying a difference between the measured value and the at least one estimated value. In a preferred embodiment, the error metric is calculated from a mean squared error between the measured value and the at least one estimated value.

In an embodiment, the classifying comprises calculating the error metric for multiple mathematical models, each of said multiple mathematical models corresponding to a different predefined type of impairment of the communication line. If the measured value is more similar to the estimated value according to a first mathematical model than to the estimated value according to a second mathematical model then the method may conclude that type of impairment described by the first mathematical model is the type of impairment causing the respective extremum in the measured value. If the measured value is more similar to the estimated value according to the second mathematical model then the method may conclude that the type of impairment described by the second mathematical model is the type of impairment causing the respective extremum in the measured value.

Accordingly, in an embodiment, the classifying comprises identifying the type of impairment whose error metric characterizes a minimum error among all error metrics calculated for the local extremum using the individual mathematical models and assigning the identified type of impairment to the local extremum.

In an embodiment, the types of impairment include a bridged tap within the communication line and/or radio frequency interferences by which the communication line is affected. In this embodiment, the method can distinguish between local extrema caused by a bridged tap and local extrema caused by radio frequency interferences.

In an embodiment, the classifying comprises defining a frequency range of interest including the local extremum and comparing the measured value with the at least one estimated value within the frequency range of interest.

In a preferred embodiment, the frequency range of interest is defined such that the frequency range includes exactly one local extremum.

In an embodiment, the method comprises calculating a further frequency dependent value of the frequency dependent parameter, which value includes the local extrema of a single considered type of impairment only. Known approaches for determining further information about an impairment of a single predefined type may be advantageously applied on the further value of frequency dependent parameter. For example known approaches for estimating the length or the location of a bridged tap or known approaches for deciding on whether or not radio frequency interferences are caused by a switched-mode power supply unit may be applied.

In an embodiment, calculating the further value comprises removing the local extrema from the measured value whose type differs from the considered type of impairment.

Preferably, removing a local extremum comprises interpolating the further value based on two extrema that surround the local extremum to be removed. In a preferred embodiment, linear interpolation is used to interpolate the further value.

According another preferred embodiment of the present invention, a device for analyzing a communication line is provided, the device being operable for determining a measured value of a frequency dependent parameter that describes transmission characteristics of the communication line; detecting at least one local extremum of the measured value; and classifying the at least one local extremum; wherein the classifying comprises assigning a predefined type of impairment of the communication line to the local extremum based on comparing a course of the measured value of the frequency dependent parameter with at least one estimated value of the parameter, wherein the estimated value is determined based on a mathematical model of the parameter, the mathematical model assuming the presence of a predefined type of impairment of the communication line.

In an embodiment, the device is operable, preferably programmed, for executing a method for analyzing a communication line described herein.

According to still another embodiment of the invention, a monitoring station for analyzing a communication line is provided, the monitoring station comprising a herein described device for analyzing a communication line.

According to a further embodiment of the invention, a computer program product, preferably a computer-readable storage medium is provided, the computer program product comprising a computer program programmed for executing a method for analyzing a communication line described herein when run on a computer. The storage medium may include any type of computer readable memory like semiconductor memory (e.g. RAM, ROM, Flashrom), magnetic memory (e.g. magnetic disks or tapes) or optical memory (e.g. optical discs). Moreover, the computer program product may be provided for download over a communication network such as the Internet.

**Brief description of the figures**

Exemplary embodiments and further advantages of the present invention are shown in the Figures and described in detail hereinafter.

Figure 1     shows an access network comprising multiple communication lines;
Figure 2     shows a diagram of a transfer function of a communication line having a bridged-tap;
Figure 3     shows a diagram of a Quiet Line Noise (QLN) of the communication line subject to radio frequency interferences (RFI);
Figure 4     shows diagrams of a power spectral density (PSD) of a transmitted signal, a PSD of a corresponding received signal and the quiet line noise in case that the communication line comprises a bridged-tap and is subject to radio frequency interferences;
Figure 5     shows the signal-to-noise ratio (SNR) of the line for the scenario shown in Figure 3;
Figure 6     shows the flowchart of a method for analyzing a communication line; and
Figure 7     illustrates the removal of local minima caused by a certain type of impairment from the measured signal-to-noise ratio.

## Description of the embodiments

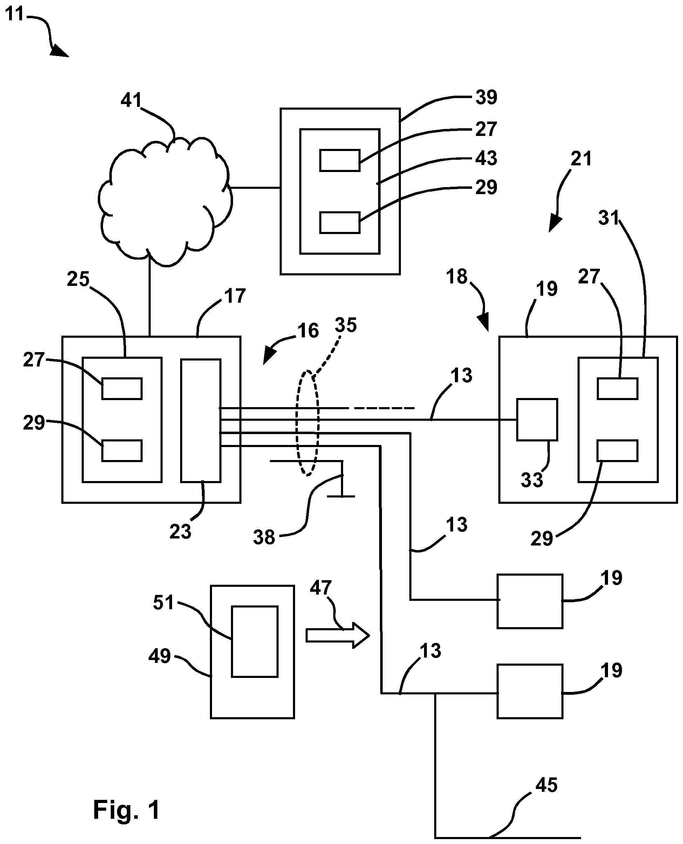

Figure 1 shows a communication network 11 comprising communication lines 13, at least one communication line 13 having a pair of electrical conductors. A first end 16 of the line 13 is connected to a network side termination node of the network 11, further referred to as access node 17, and a second end 18 of the line 13 is connected to a terminal side termination node 19 of the network 11. The terminal side termination node 19 may be part of customer premises equipment (CPE 21) of the network 11.

In the shown embodiment, the communication line 13 is a Digital Subscriber Line (DSL), such as VDSL2, ADSLx or the like. Consequently, the access node 17 may be a DSL Access Multiplexer (DSLAM) or another type of DSL access node. The terminal side termination node 19 may be a DSL modem or include a DSL modem.

The access node 17 has first modem circuitry 23 to which the first end 16 of the lines 13 is connected. In addition, the access node 17 has a first controller 25 adapted for controlling the operation of the access node 17. In an embodiment, the first controller 25 is a programmable computer comprising a processor 27, e. g. a microprocessor, and a storage element 29, e.g. semiconductor memory.

The terminal side termination node 19 includes second modem circuitry 33 to which the second end 18 of the line 13 is connected. Furthermore, the terminal side termination node 19 comprises a second controller 31. The second controller 31 may have the same basic configuration as the first controller 25, i.e. the second controller 31 may be a programmable computer and comprise a processor 27 and/or a storage element 29.

In the shown embodiment, at least some lines 13 are part of a binder 35 and extend in parallel to each other. The binder 35 may comprise an electrically conductive, preferably metallic, shielding 38 that may be grounded as depicted in Figure 1. Because at least some lines extend in parallel to each other in the binder 35, crosstalk between the lines 13 may occur.

Furthermore, the network 11 may comprise an optional monitoring station 39 connected e. g. via an interconnection network 41 to at least one of the nodes 17, 19 such that the monitoring station 39 can communicate with at least one of the nodes 17, 19, preferably the access node 17. The monitoring station 39 comprises a third controller 43. The third controller 43 may have the same basic configuration as the first controller 25, i.e. the third controller 43 may be a programmable computer and comprise a processor 27 and/or a storage element 29. In an exemplary embodiment, the station 39 may be a server computer, a personal computer, a handheld computer such as a PDA or cell phone, etc.

When operating the network 11 shown in Figure 1, the first modem circuitry 33 of the individual terminal side termination nodes 19 communicate over one of the communication lines 13 with the first modem circuitry 23 of the access node 17. The respective communication line 13 thereby provides a data communication link for data communication between the access node 17 and the respective terminal side termination node 19. The data communication link may be used for providing telecommunication services like internet access, telephone service, IP television (IPTV), etc.

The communication over the lines 13 may be disturbed by impairments of various types. For example, a bridged-tap 45 constitutes a certain type of impairment. The bridged-tap 45 is an un-terminated segment connected to a main part of the communication line 13. The bridged-tap 45 may be a result of incorrect wiring within a building. Moreover, a bridged-tap 45 may even have been created intentionally in older cabling systems intended for use in connection with classical telephone services using low frequencies on the line 13, where a bridged-tap 45 does not cause any problems.

Another type of impairment is radio frequency interferences (RFI 47). Radio frequency interferences 47 are often caused by an electrical or electronic device 49 installed close to the communication line 13. In many cases, it is a switched power supply unit 51 of the device 49 that emits electromagnetic radiation that is coupled into the communication line 13. The electromagnetic radiation typically includes frequency ranges also used for the data communication on the lines 13 causing the radio frequency interference 47.

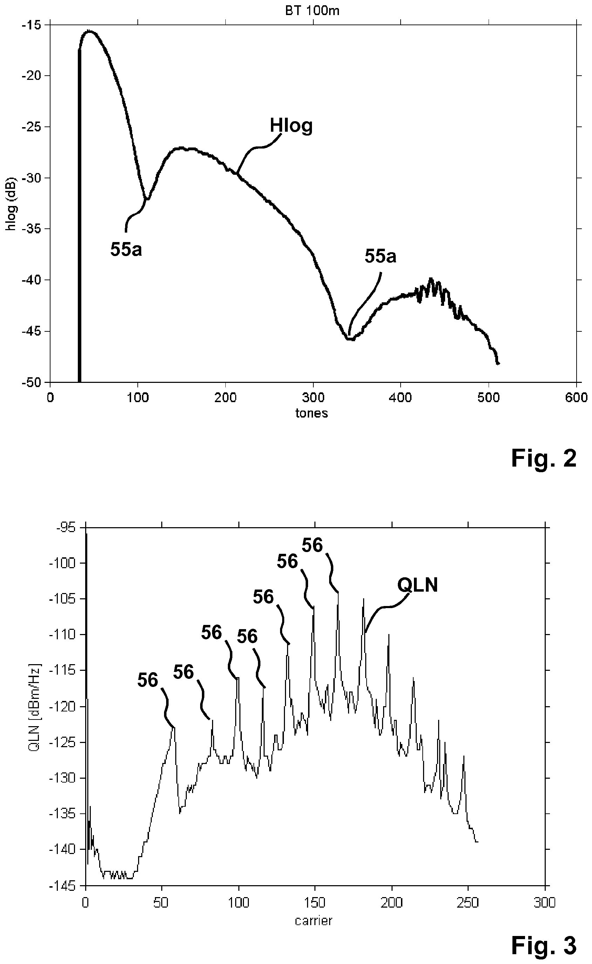

Figure 2 shows a diagram of a measured transfer function Hlog of one of the communication lines 13. This transfer function Hlog is measured during a synchronization phase during which the modem circuitries 23, 33 are synchronized with each other. In typical DSL systems, the transfer function Hlog cannot be measured after synchronization, in particular during normal operation ("showtime" state) of the line 13. The transfer function Hlog is plotted in a logarithmic scale, (e. g. in dB) over the frequency indicated in the form of a tone index related to the Discrete Multi-Tone (DMT) modulation scheme used in the DSL system described herein. The tone index scale used in the Figures can be mapped into an Hz scale by multiplying the tone index (also referred to as "carrier number") with the carrier spacing used according to the applied modulation scheme. In the shown system, the carrier spacing is $\Delta f = 4.3125$ kHz.

The line 13 having the transfer function Hlog shown in Figure 2 has a bridged-tap impairment resulting in the transfer function Hlog having one or more local minima 55a (so-called "dips"). The local minima 55a of the transfer function Hlog indicate the presence of a bridged-tap type impairment.

Furthermore, by analyzing the location of the local minima 55a in the frequency domain and/or by determining the distance between neighboring local minima 55a, more detailed information about the bridged-tap, like the length of the bridged-tap may be determined.

Figure 3 shows a quiet line noise QLN in dBm/Hz of the line 13 over the frequency indicated in the form of a tone index. The respective line 13 has an impairment of the RFI type. The RFI causes multiple local maxima 56 in the frequency dependent quiet line noise QLN. The frequency dependent parameters Hlog, QLN shown in Figures 2 and 3, refer to the same line 13. A bridged-tap 45 may be detected by analyzing the transfer function Hlog and radio frequency interferences 47 may be detected by analyzing the frequency dependent quiet line noise. QLN. Both the transfer function Hlog and the quiet line noise QLN are determined during the synchronization phase, i.e. during initialization of the data communication over the lines 13, only.

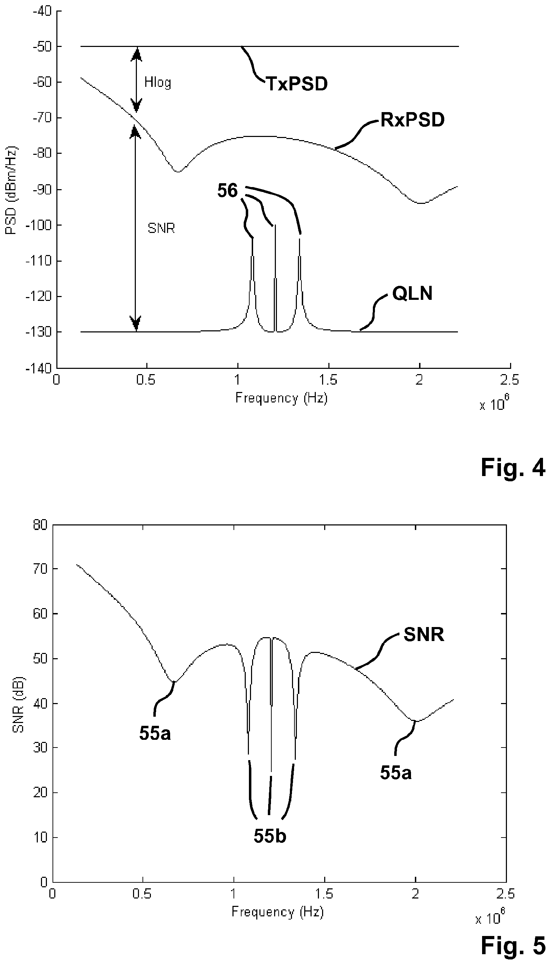

Figure 4 illustrates how signal-to-noise ratio SNR of a signal received from a line 13 depends on the power spectral density TxPSD of a signal transmitted by a modem circuitry 23, 33 and fed into the line 13, the transfer function Hlog and the quiet line noise QLN. In the logarithmic representation used in Figure 4, a power spectral density RxPSD of a signal received by a modem circuitry 33, 23 from the line 13 can be expressed as the sum of the power spectral density TxPSD of the transmitted signal and the negative valued transfer function Hlog. The signal-to-noise ratio SNR is the difference between the power spectral density RxPSD of the received signal and the quiet line noise QLN. The quiet line noise QLN represents crosstalk originating from other modem circuitries 23, 34 connected to the other line 13 or noise caused by radio frequency interferences. The relationships between the values of the parameters shown in Figure 4 can be expressed as follows:

$$RxPSD = TxPSD + Hlog \qquad (1)$$

$$SNR = RxPSD - QLN = TxPSD + HLog - QLN \qquad (2)$$

The values of the frequency dependent parameters TxPSD, Hlog, RxPSD, SNR and QLN shown in Figure 4 refer to an exemplary scenario where a line 13 has impairments of two different types, i.e. three radio frequency interferences present at frequencies of 1.018 MHz (250.5 · Δf), 1.007 MHz (280 · Δf) and 1.335 MHz (309.5 · Δf).

As can be seen in Figure 4, the exact shape of the quiet line noise QLN around the frequencies where the RFI occurs depend on whether or not the RFI occur exactly on the center frequency n · Δf of a carrier or between center frequencies n · Δf, (n+1) · Δf of subsequent carriers. This difference, as regards the shape of the QLN, is caused by artifacts of the measurement approach used in the DSL system, which is based on a Fast Fourier Transform (FFT) using a rectangular window.

As can be seen in Figure 5, the signal-to-noise ratio SNR constitutes a frequency dependent parameter whose values are affected by both above-described types of impairments and therefore includes both the local minima 55a caused by the bridged-tap as well as local minima 55b corresponding to the maxima 56 caused by the RFI. The maxima 56 in the QLN correspond to the minima 55b in the SNR because the SNR is calculated by subtracting the QLN from the received signal power spectral density RxPSD.

In the following, a method will be described that can detect an impairment based on the signal-to-noise ratio SNR and identify the type of impairment relying on the SNR only. To this end, the method applies a pattern matching algorithm to determine whether a local minimum 55a, 55b is caused by a bridged-tap 45 or radio frequency interference 47 (classification of the minima). When the individual local minima 55a, 55b have been classified, i.e. a type has been assigned to the individual local minimum 55a, 55b, then known approaches may be applied to refine the diagnosis, e. g. the number of bridged-taps may be determined or the cause of radio frequency interferences may be further analyzed; for example it can be decided whether radio frequency interferences are caused by a switched DC/DC converter.

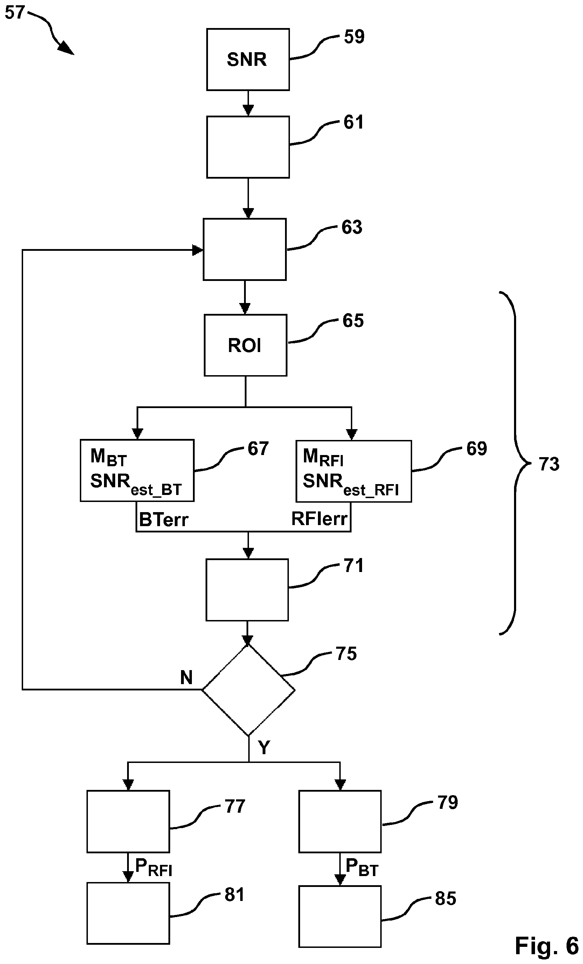

Figure 6 shows an exemplary flowchart of the method 57. The method 57 may be executed on any node 17, 19, 39 of the network 11. A respective storage element 29 of the node 17, 19, 39 may be programmed so that the respective processor 27 executes the method 57. In a preferred embodiment, the method 57 is executed on the monitoring station 39. The monitoring station 39 uses communication protocols, e.g. the Simple Network Management Protocol (SNMP), in order to retrieve a measured value of a frequency dependent parameter that describes the transmission characteristics of the communication line 13.

For retrieving the measured frequency depending parameter, the method 57 includes a step 59. In the shown embodiment, the frequency dependent parameter is the signal-to-noise ratio SNR measured e.g. by the first modem circuitry 23 of the access node 17 or the second modem circuitry 33 of the terminal side termination node 19. Typically, the SNR value is represented as a vector comprising SNR values for different frequencies.

A further step 61 of the method 57 detects local minima present in the retrieved SNR value. A minimum can be found e. g. by using the first derivative method, i.e. detecting a local minimum 55a, 55b when there is a sign change in the first derivative of the SNR from negative to positive. It should be noted that the exemplary method 57 shown in Figure 6 relies on the representation of the SNR shown in Figure 5. However, in other embodiments the method 57 may also comprise detecting maxima instead of minima, in particular when the representation of the SNR is inverted with respect to the representation shown in Figure 5.

The method 57 comprises a loop for applying a pattern matching algorithm against multiple mathematical models $M_{BT}$, $M_{RFI}$ of the frequency dependent parameter SNR retrieved in step 59, each model assuming a specific type of impairment. In the shown embodiment, two types of impairments are considered, i.e. radio frequency interferences and bridged-taps. In a step 63, one of the local minima 55a, 55b detected in step 61 that has not yet been selected in an earlier iteration of the loop, is selected. Then a step 65 of the method 57 defines for the selected local minimum a frequency range (region of interest ROI) including the local minimum. Preferably, the frequency range ROI is defined such that it extends around the selected local minimum 55a, 55b but does not include any other local minima 55a, 55b. In other words, the frequency range ROI is defined such that it includes exactly one local minimum, i.e. the selected local minimum 55a, 55b. The pattern matching algorithm will be applied on the SNR within the defined ROI. Therefore, the ROI must be wide enough to perform reliable matching, but still narrow such that it contains a single local minimum.

The pattern matching is performed in two steps 67 and 69 of the method 57. In the flow chart of Figure 6, these two steps 67 and 69 are executed in parallel. However, the steps 67, 69 may also be executed subsequently in any order. The steps 67, 69 include comparing a course of the measured value of the signal-to-noise ratio SNR with a calculated value of the signal-to-noise ratio. The calculated value is determined based on a mathematic model of the parameter assuming the presence of an impairment of a pre-defined type. In the shown embodiment, step 67 uses a mathematical model $M_{BT}$ in order to calculate a first estimated value $SRN_{est\_BT}$ of the signal-to-noise ratio within the region of interest ROI. The first estimated value $SRN_{est\_BT}$ may be a vector comprising elements for different frequencies within the region of interest ROI. Step 67 therefore matches a measured SNR curve within the region of interest ROI to the mathematical model $M_{BT}$ of the bridged-tap. The frequency response of a line 13 comprising a bridged-tap 45 can be expressed by the following equations resulting from the superposition of two waves, the first wave going directly along the main signal path, and the second wave going back and forth the bridged-tap 45, then following the main signal path.

$$H = \frac{1}{2} e^{-\gamma L} + \frac{1}{2} e^{-\gamma (L + 2.Ltap)} \tag{3}$$

$$Hlog = 20.log_{10}(|H|) \tag{4}$$

The symbol $\gamma$ is the propagation constant that can be reliably approximated within the frequency range used in DSL system by the following equation:

$$\gamma(f) = k.\sqrt{f} + \frac{\omega}{c}.j \tag{5}$$

The constant k is the attenuation constant of the line 13 and the constant c is the velocity of propagation within the line 13. These constants k, c depend on the cable type. For instance for AWG24 cables, their values are k = 2.45e-6 and c = 2e8. Ltap describes the length of the bridged tap 45.

Assuming a flat (i.e. frequency independent) transmit power spectral density TxPSD and flat QLN, which is a reasonable approximation for sufficiently narrow regions of interest ROI, the transfer function Hlog computed by the formula above should have at least essentially the same shape as a measured signal-to-noise ratio SNR if the local minimum 55a is induced by a bridged-tap 45. Hence, a reasonable SNR estimation according to the mathematical model $M_{BT}$ would be

$$SNR_{est\_BT} = Hlog + offset \tag{6}$$

If the mathematical model is a parametric model then the respective pattern matching step may include finding parameters that minimize a residual error between the measured SNR and the $SNR_{est\_BT}$ values estimated by the model. In the shown embodiment, the model $M_{BT}$ includes the parameters L, $L_{tap}$ and offset - as can be seen in equations (3) and (6). Consequently, step 67 includes numerically finding the values of L, Ltap and offset and minimizing the residual error between the measured SNR value determined in step 59 and the estimated value $SNR_{BT}$.

The residual error can be for example the sum of the squared errors between the estimated and the measured SNR.

$$BTerr = \sum_{i \in ROI} (SNR_{est\_BT_i} - SNR_i)^2 \qquad (7)$$

Step 69 performs basically the same operations as step 67 using a different mathematical model than step 67. Step 69 uses mathematical model $M_{RFI}$ describing the SNR curve in case of a local minimum 55b caused by radio frequency interference. The exact shape of the QLN curve around a maximum 56 caused by radio frequency interference is mainly given by the side lobes due to the rectangular window of the FFT used in DSL systems. Accordingly, the measured PSD of the radio frequency interference can be predicted using the following equation

$$PSD_{RFI} = P_{RFI} \frac{\sin\left(\pi.\frac{f - f_{RFI}}{\Delta f}\right)}{\pi.\frac{f - f_{RFI}}{\Delta f}} \qquad (8)$$

The value $P_{RFI}$ is the peak power of the radio frequency interference in mW/Hz. The frequency $f_{RFI}$ is the center frequency of the radio frequency interference and $\Delta f$ is the carrier spacing.
Assuming a flat course of the QLN within the region of interest ROI, an estimation of the QLN can be written as

$$QLN = 10.log_{10}(PSD_{RFI} + WN) \qquad (9)$$

The value WN is the white noise level in mW/Hz.
Assuming a flat TxPSD (reasonable estimation for sufficiently narrow ROI), the opposite -QLN of the QLN computed by the formula above should have the same shape as the measured signal-to-noise ratio if the local minimum 55b is induced by radio frequency interferences. Hence, a reasonable SNR estimation would be

$$SNR_{est\_RFI} = -QLN + offset \qquad (10)$$

Like the mathematical model $M_{BT}$, the mathematical model $M_{RFI}$ is also a parametric model. Therefore, step 69 includes numerically finding the values $F_{RFI}$, $P_{RFI}$, WN and offset that minimized the residual error $RFI_{err}$ between the estimated value $SNR_{est\_RFI}$ and the measured value of the signal-to-noise ratio SNR.
In the shown embodiment, the residual error is calculated as the sum of squared errors between the estimated and the measured SNR, with applying the model $M_{RFI}$ for calculating the estimated value $SNR_{est\_RFI}$.

$$RFIerr = \sum_{i \in ROI} (SNR_{est\_RFI_i} - SNR_i)^2 \qquad (11)$$

In the embodiment described herein, the value $SNR_{est\_RFI}$ is a frequency dependent vector, elements $SNR_{est\_RFI_i}$ of which corresponding to a certain frequency within the ROI.
After completion of the pattern matching steps 67, 69 a step 71 of the method 57 may be executed for assigning a type of impairment to the selected local minimum 55a, 55b. Assigning a type of impairment may comprise associating information to a local extremum, e.g. a local minimum, which information specifies the type of impairment, e.g. whether the respective extremum/minimum is of the bridged-tap type or the RFI type. In a practical implementation of the method, this information may be stored in memory. For example, a table or a different data structure may be maintained that stores which type of impairment is assigned to a certain local extremum.
The assignment of the type of impairment to the selected local minimum is based on a comparison of the course of the measured value SNR of the signal-to-noise ratio with at least one estimated value $SNR_{est\_BT}$, $SNR_{est\_RFI}$ calculated in step 67 and 69. As described above, the estimated values $SNR_{est\_BT}$, $SNR_{est\_RFI}$ are calculated assuming the presence of a pre-defined type of impairment of the communication line 13. In the shown embodiment, step 71 classifies the local minimum 55a, 55b as being caused by a bridged-tap 45 or by an RFI 47 respectively, if the respective residual error

$BT_{err}$ or $RFI_{err}$ has the lowest value. Accordingly, steps 65, 67, 69 and 71 constitute a classification part 73 of the method 57 for assigning a type of impairment of the communication line 13 to a local minimum 55a, 55b selected in step 63.

A branch 75 checks if all local minima 55a, 55b detected in step 61 have previously been selected and classified. If not (N), then the method repeats step 63 in order to select another not yet classified local minimum 55a, 55b. Otherwise (Y) the method 57 continues with steps 77 and 79 that may be executed simultaneously. The step 77 and 79 and the steps following to step 77, 79 serve to calculating further values $P_{RFI}$, $P_{BT}$ of the frequency-dependent parameter SNR, which values includes the local extreme 55a, 55b caused by a single type of impairment 45, 47 only. For instance, steps 77, 79 may comprise removing the local extrema, e. g. the local minima, from the value whose type differs from the considered type of impairment. In an embodiment, removing the local extremum may be carried out by interpolating a value based on extrema, e. g. local maxima, that surround the local extrema, e. g. local minimum, to be removed.

Accordingly, step 77 aims at calculating, as a further frequency dependent value, a SNR that include local minima 55b caused by radio frequency interferences only. To this end, step 77 removes all minima 55a caused by bridged-taps 45. The so-obtained further frequency dependent parameter $P_{RFI}$ includes only those local minima 55b that are caused by radio frequency interference.

Then a step 81 may be executed that analyses the value $P_{RFI}$ of the further frequency dependent parameter in order to calculate more detailed information about the impairment of the RFI type. For example, step 81 may include determining if the radio frequencies interferences caused by a switched power supply unit.

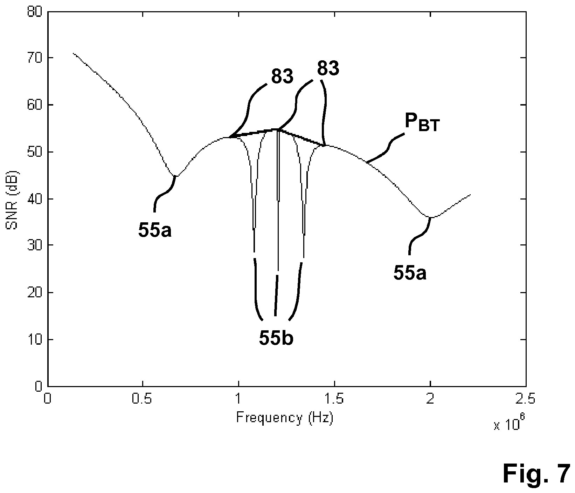

Similarly, step 79 may remove all local minima 55b that are not caused by a bridged-tap 45. In the shown embodiment, step 79 may include removing the minima 55b caused by radio frequency interference. This is illustrated in Figure 7. As classification 73 has already assigned a type of impairment to the individual minima 55a, 55b, it is known that the minima 55b are caused by radio frequency interference. Accordingly, step 79 removes the local minima 55b from the measured value of the signal-to-noise ratio SNR in order to obtain the further frequency dependent value $P_{BT}$. Removing these local minima 55b may include connecting the two adjacent local maxima 83 surrounding each local minimum 55b to be erased by a straight line. That is, the further value $P_{BT}$ of the frequency dependent parameter is determined by linear interpolation between the two adjacent local maxima 83. However, any other interpolation approach may also be applied in order to erase the unwanted local minima 55b. The value $P_{BT}$ of the signal-to-noise ratio SNR will be analyzed in step 85 of the method 57. Step 85 may apply known bridged-tap detection techniques in order to obtain further information about the bridged-taps, e. g. the number of bridged-taps and the length of each of them or at least some of them.

To sum up, the method 57 and device described herein allow detecting and discriminating from each other different types of impairments using measured values of the signal-to-noise ratio. The signal-to-noise ratio SNR is always available and can always be retrieved from network elements of the network 11. Therefore, the individual lines 13 of the network 11 can be diagnosed at any time without interrupting the service provided over these lines 13. In another embodiment, a different frequency depending parameter, e.g. the bitloading of the line 13, is used instead of the signal to noise ratio. The method 57 described herein may be applied accordingly in connection with the different frequency dependent parameter. In addition, the method 57 relying on a single measured frequency dependent parameter such as the signal-to-noise ratio SNR or the bitloading only, can easily be used in connection with communication systems other than DSL like home plug for Power Line Communication (PLC).

**Claims**

1. Method (57) for analyzing a communication line (13), the method (57) comprising

   - determining (59) a measured value (SNR) of a frequency dependent parameter that describes transmission characteristics of the communication line (13);
   - detecting (61) at least one local extremum (55a, 55b) of the measured value (SNR); and
   - classifying (73) the at least one local extremum (55a, 55b);

   wherein the classifying (73) comprises assigning (71) a type of impairment of the communication line (13) to the local extremum (55a, 55b) based on comparing (67, 69) the measured value (SNR) of the frequency dependent parameter with at least one estimated value ($SNR_{estBT}$, $SNR_{estRFI}$) of the parameter, **characterized in that** the method (57) comprises determining (67, 69) the estimated value ($SNR_{estBT}$, $SNR_{estRFI}$) based on a mathematical model ($M_{BT}$, $M_{RFI}$) of the parameter assuming the presence of a predefined type of impairment (45, 47) of the communication line (13).

2. Method according to claim 1, wherein the mathematical model is a parametric model ($M_{BT}$, $M_{RFI}$) and wherein the method (57) comprises finding (67, 69) one or more parameters that minimize a residual error between the measured value (SNR) and the at least one estimated value ($SNR_{estBT}$, $SNR_{estRFI}$).

3. Method (57) according to claim 1 or 2, wherein the measured value describes a signal to noise ratio (SNR) of the communication line (13) and/or the at least one local extremum is a local minimum (55a, 55b).

4. Method (57) according to one of the precedent claims, wherein the classifying (73) comprises calculating (67, 69) an error metric, the error metric quantifying a difference between the measured value (SNR) and the at least one estimated value ($SNR_{estBT}$, $SNR_{estRFI}$).

5. Method (57) according to claim 4, wherein the classifying (73) comprises calculating the error metric for multiple mathematical models ($M_{BT}$, $M_{RFI}$), each of said multiple mathematical models ($M_{BT}$, $M_{RFI}$) corresponding to a different predefined type of impairment (45, 47) of the communication line (13).

6. Method (57) according to claim 4 or 5, wherein the classifying (73) comprises identifying (71) the type of impairment whose error metric characterizes a minimum error among all error metrics calculated for the local extremum (55a, 55b) and assigning the identified type of impairment (45, 47) to the local extremum (55a, 55b).

7. Method (57) according to one of the precedent claims, wherein the types of impairment include a bridged tap (45) within the communication line (13) and/or radio frequency interferences (47) by which the communication line (13) is affected.

8. Method (57) according to one of the precedent claims, wherein the classifying (73) comprises defining (65) a frequency range of interest (ROI) including the local extremum (55a, 55b) and comparing the measured value (SNR) with the at least one estimated value ($SNR_{estBT}$, $SNR_{estRFI}$) within the frequency range of interest (ROI).

9. Method (57) according to one of the precedent claims, wherein the method (57) comprises calculating (77, 79) a further value ($P_{RFI}$, $P_{BT}$) of the frequency dependent parameter, which value ($P_{RFI}$, $P_{BT}$) includes the local extrema of a single considered type of impairment (45, 47).

10. Method (57) according to claim 9, wherein the calculating (77, 79) the further value ($P_{RFI}$, $P_{BT}$) comprises removing the local extrema (55a, 55b) from the measured value (SNR) whose type differs from the considered type of impairment (45, 47).

11. Method (57) according to claim 10, wherein removing a local extremum (55a, 55b) comprises interpolating the further value ($P_{RFI}$, $P_{BT}$) based on two extrema (55a, 55b) that surround the local extremum (55b, 55a) to be removed.

12. Device (25, 31, 43) for analyzing a communication line (13), the device (43) being operable for

    - determining (59) a measured value (SNR) of a frequency dependent parameter that describes transmission characteristics of the communication line (13);
    - detecting (61) at least one local extremum (55a, 55b) of the measured value (SNR); and
    - classifying (73) the at least one local extremum (55a, 55b);

    wherein the classifying (73) comprises assigning (71) a type of impairment of the communication line (13) to the local extremum (55a, 55b) based on comparing (67, 69) the measured value (SNR) of the frequency dependent parameter with at least one estimated value ($SNR_{estBT}$, $SNR_{estRFI}$) of the parameter, **characterized in that** the device (43) is operable for determining (67, 69) the estimated value ($SNR_{estBT}$, $SNR_{estRFI}$) based on a mathematical model ($M_{BT}$, $M_{RFI}$) of the parameter assuming the presence of a predefined type of impairment (45, 47) of the communication line (13).

13. Device (25, 31, 43) according to claim 12, wherein the device (25, 31, 43) is operable for executing a method (57) according to one of claims 1 to 11.

14. Monitoring station (39) for analyzing a communication line (13), the monitoring station (39) comprising a device (43) according to one of claims 12 and 13.

15. Computer program product, preferably a computer-readable storage medium (29), the computer program product comprising a computer program programmed for executing a method (57) according to one of claims 1 to 11 when run on a computer (25, 31, 43).


**Patentansprüche**

1. Verfahren (57) zur Analyse einer Kommunikationsleitung (13), wobei das Verfahren (57) Folgendes umfasst:

   - Bestimmen (59) eines gemessenen Wertes (SNR) eines frequenzabhängigen Parameters, der Übertragungsmerkmale der Kommunikationsleitung (13) beschreibt;
   - Erkennen (61) von mindestens einem lokalen Extremwert (55a, 55b) des gemessenen Wertes (SNR); und
   - Klassifizieren (73) des mindestens einen lokalen Extremwertes (55a, 55b);

   wobei das Klassifizieren (73) das Zuweisen (71) einer Art von Beeinträchtigung der Kommunikationsleitung (13) zum lokalen Extremwert (55a, 55b) basierend auf einem Vergleich (67, 69) des gemessenen Wertes (SNR) des frequenzabhängigen Parameters mit mindestens einem geschätzten Wert ($SNR_{estBT}$, $SNR_{estRFI}$) des Parameters umfasst, **dadurch gekennzeichnet, dass** das Verfahren (57) das Bestimmen (67, 69) des geschätzten Wertes ($SNR_{estBT}$, $SNR_{estRFI}$) basierend auf einem mathematischen Modell ($M_{BT}$, $M_{RFI}$) des Parameters umfasst, das von der Anwesenheit einer vorausdefinierten Art von Beeinträchtigung (45, 47) der Kommunikationsleitung (13) ausgeht.

2. Verfahren nach Anspruch 1, wobei das mathematische Modell ein parametrisches Modell ($M_{BT}$, $M_{RFI}$) ist und wobei das Verfahren (57) das Finden (67, 69) von einem oder mehreren Parametern umfasst, die einen Restfehler zwischen dem gemessenen Wert (SNR) und dem mindestens einen geschätzten Wert ($SNR_{estBT}$, $SNR_{estRFI}$) minimieren.

3. Verfahren (57) nach Anspruch 1 oder 2, wobei der gemessene Wert ein Signal-Rausch-Verhältnis (SNR) der Kommunikationsleitung (13) beschreibt und/oder der mindestens eine lokale Extremwert ein lokales Minimum (55a, 55b) ist.

4. Verfahren (57) nach einem der vorstehenden Ansprüche, wobei das Klassifizieren (73) das Berechnen (67, 69) einer Fehlermetrik umfasst, wobei die Fehlermetrik eine Differenz zwischen dem gemessenen Wert (SNR) und dem mindestens einen geschätzten Wert ($SNR_{estBT}$, $SNR_{estRFI}$) quantifiziert.

5. Verfahren (57) nach Anspruch 4, wobei das Klassifizieren (73) das Berechnen der Fehlermetrik für mehrere mathematische Modelle ($M_{BT}$, $M_{RFI}$) umfasst, wobei jedes der besagten mehreren mathematischen Modelle ($M_{BT}$, $M_{RFI}$) einer unterschiedlichen vorausdefinierten Art von Beeinträchtigung (45, 47) der Kommunikationsleitung (13) entspricht.

6. Verfahren (57) nach Anspruch 4 oder 5, wobei das Klassifizieren (73) das Identifizieren (71) der Art von Beeinträchtigung umfasst, deren Fehlermetrik einen Minimalfehler unter allen Fehlermetriken kennzeichnet, die für den lokalen Extremwert (55a, 55b) berechnet werden, und das Zuweisen der identifizierten Art von Beeinträchtigung (45, 47) zum lokalen Extremwert (55a, 55b).

7. Verfahren (57) nach einem der vorstehenden Ansprüche, wobei die Arten von Beeinträchtigung einen überbrückten Abgriff (45) in der Kommunikationsleitung (13) und/oder Funkfrequenzstörungen (47) beinhalten, von denen die Kommunikationsleitung (13) betroffen ist.

8. Verfahren (57) nach einem der vorstehenden Ansprüche, wobei das Klassifizieren (73) das Definieren (65) eines relevanten Frequenzbereichs (ROI) einschließlich des lokalen Extremwertes (55a, 55b) und das Vergleichen des gemessenen Wertes (SNR) mit dem mindestens einen geschätzten Wert ($SNR_{estBT}$, $SNR_{estRFI}$) innerhalb des relevanten Frequenzbereichs (ROI) umfasst.

9. Verfahren (57) nach einem der vorstehenden Ansprüche, wobei das Verfahren (57) das Berechnen (77, 79) eines weiteren Wertes ($P_{RFI}$, $P_{BT}$) des frequenzabhängigen Parameters umfasst, wobei der Wert ($P_{RFI}$, $P_{BT}$) den lokalen Extremwert einer einzelnen betrachteten Art von Beeinträchtigung (45, 47) beinhaltet.

10. Verfahren (57) nach Anspruch 9, wobei das Berechnen (77, 79) des weiteren Wertes ($P_{RFI}$, $P_{BT}$) das Abziehen des lokalen Extremwertes (55a, 55b) von dem gemessenen Wert (SNR) umfasst, dessen Art sich von der betrachteten Art von Beeinträchtigung (45, 47) unterscheidet.

**11.** Verfahren (57) nach Anspruch 10, wobei das Abziehen eines lokalen Extremwertes (55a, 55b) das Interpolieren des weiteren Wertes ($P_{RFI}$, $P_{BT}$) basierend auf zwei Extremwerten (55a, 55b) umfasst, die den abzuziehenden lokalen Extremwert (55b, 55a) umgeben.

**12.** Vorrichtung (25, 31, 43) zur Analyse einer Kommunikationsleitung (13), wobei die Vorrichtung (43) betriebsfähig ist zum

- Bestimmen (59) eines gemessenen Wertes (SNR) eines frequenzabhängigen Parameters, der Übertragungsmerkmale der Kommunikationsleitung (13) beschreibt;
- Erkennen (61) von mindestens einem lokalen Extremwert (55a, 55b) des gemessenen Wertes (SNR); und
- Klassifizieren (73) des mindestens einen lokalen Extremwertes (55a, 55b);

wobei das Klassifizieren (73) das Zuweisen (71) einer Art von Beeinträchtigung der Kommunikationsleitung (13) zum lokalen Extremwert (55a, 55b) basierend auf einem Vergleich (67, 69) des gemessenen Wertes (SNR) des frequenzabhängigen Parameters mit mindestens einem geschätzten Wert ($SNR_{estBT}$, $SNR_{estRFI}$) des Parameters umfasst, **dadurch gekennzeichnet, dass** die Vorrichtung (43) betriebsfähig ist zum Bestimmen (67, 69) des geschätzten Wertes ($SNR_{estBT}$, $SNR_{estRFI}$) basierend auf einem mathematischen Modell ($M_{BT}$, $M_{RFI}$) des Parameters, das von der Anwesenheit einer vorausdefinierten Art von Beeinträchtigung (45, 47) der Kommunikationsleitung (13) ausgeht.

**13.** Vorrichtung (25, 31, 43) nach Anspruch 12, wobei die Vorrichtung (25, 31, 43) betriebsfähig ist zum Ausführen eines Verfahrens (57) nach einem der Ansprüche 1 bis 11.

**14.** Überwachungsstation (39) zur Analyse einer Kommunikationsleitung (13), wobei die Überwachungsstation (39) eine Vorrichtung (43) nach einem der Ansprüche 12 und 13 umfasst.

**15.** Computerprogrammprodukt, vorzugsweise ein computerlesbares Speichermedium (29), wobei das Computerprogrammprodukt ein Computerprogramm umfasst, das zum Ausführen eines Verfahrens (57) nach einem der Ansprüche 1 bis 11 programmiert ist, wenn es auf einem Computer (25, 31, 43) gestartet wird.

**Revendications**

**1.** Procédé (57) d'analyse d'une ligne de communication (13), le procédé (57) comprenant les étapes suivantes :

- déterminer (59) une valeur mesurée (SNR) d'un paramètre dépendant de la fréquence qui décrit des caractéristiques de transmission de la ligne de communication (13) ;
- détecter (61) au moins un extremum local (55a, 55b) de la valeur mesurée (SNR) ; et
- classer (73) l'au moins un extremum local (55a, 55b) ;

dans lequel le classement (73) comprend l'attribution (71) d'un type de dégradation de la ligne de communication (13) à l'extremum local (55a, 55b) sur la base d'une comparaison (67, 69) de la valeur mesurée (SNR) du paramètre dépendant de la fréquence avec au moins une valeur estimée ($SNR_{estBT}$, $SNR_{estRFI}$) du paramètre, **caractérisé en ce que** le procédé (57) comprend la détermination (67, 69) de la valeur estimée ($SNR_{estBT}$, $SNR_{estRFI}$) sur la base d'un modèle mathématique ($M_{BT}$, $M_{RFI}$) du paramètre supposant la présence d'un type de dégradation prédéfini (45, 47) de la ligne de communication (13).

**2.** Procédé selon la revendication 1, dans lequel le modèle mathématique est un modèle paramétrique ($M_{BT}$, $M_{RFI}$) et dans lequel le procédé (57) consiste à trouver (67, 69) un ou plusieurs paramètres qui réduisent au minimum une erreur résiduelle entre la valeur mesurée (SNR) et l'au moins une valeur estimée ($SNR_{estBT}$, $SNR_{estRFI}$).

**3.** Procédé (57) selon la revendication 1 ou 2, dans lequel la valeur mesurée décrit un rapport signal sur bruit (SNR) de la ligne de communication (13) et/ou l'au moins un extremum local est un minimum local (55a, 55b).

**4.** Procédé (57) selon l'une des revendications précédentes, dans lequel le classement (73) comprend le calcul (67, 69) d'une mesure d'erreur, la mesure d'erreur quantifiant une différence entre la valeur mesurée (SNR) et l'au moins une valeur estimée ($SNR_{estBT}$, $SNR_{estRFI}$).

**5.** Procédé (57) selon la revendication 4, dans lequel le classement (73) comprend le calcul de la mesure d'erreur pour de multiples modèles mathématiques ($M_{BT}$, $M_{RFI}$), chacun desdits multiples modèles mathématiques ($M_{BT}$, $M_{RFI}$) correspondant à un type de dégradation prédéfini différent (45, 47) de la ligne de communication (13).

**6.** Procédé (57) selon la revendication 4 ou 5, dans lequel le classement (73) comprend l'identification (71) du type de dégradation, dont la mesure d'erreur caractérise une erreur minimum parmi toutes les mesures d'erreur calculées pour l'extremum local (55a, 55b), et l'attribution du type de dégradation identifié (45, 47) à l'extremum local (55a, 55b).

**7.** Procédé (57) selon l'une des revendications précédentes, dans lequel les types de dégradation comprennent un branchement en dérivation (45) à l'intérieur de la ligne de communication (13) et/ou des interférences radioélectriques (47) qui affectent la ligne de communication (13).

**8.** Procédé (57) selon l'une des revendications précédentes, dans lequel le classement (73) comprend la définition (65) d'une plage souhaitée (ROI) de fréquences comprenant l'extremum local (55a, 55b) et la comparaison de la valeur mesurée (SNR) avec l'au moins une valeur estimée ($SNR_{estBT}$, $SNR_{estRFI}$) à l'intérieur de la plage souhaitée (ROI) de fréquences.

**9.** Procédé (57) selon l'une des revendications précédentes, dans lequel le procédé (57) comprend le calcul (77, 79) d'une autre valeur ($P_{RFI}$, $P_{BT}$) du paramètre dépendant de la fréquence, ladite valeur ($P_{RFI}$, $P_{BT}$) comprenant les extremums locaux d'un type de dégradation pris en considération unique (45, 47).

**10.** Procédé (57) selon la revendication 9, dans lequel le calcul (77, 79) de l'autre valeur ($P_{RFI}$, $P_{BT}$) comprend l'élimination des extremums locaux (55a, 55b) de la valeur mesurée (SNR) dont le type diffère du type de dégradation pris en considération (45, 47).

**11.** Procédé (57) selon la revendication 10, dans lequel l'élimination d'un extremum local (55a, 55b) comprend l'interpolation de l'autre valeur ($P_{RFI}$, $P_{BT}$) sur la base de deux extremums (55a, 55b) qui entourent l'extremum local (55b, 55a) à éliminer.

**12.** Dispositif (25, 31, 43) d'analyse d'une ligne de communication (13), le dispositif (43) permettant de

   - déterminer (59) une valeur mesurée (SNR) d'un paramètre dépendant de la fréquence qui décrit des caractéristiques de transmission de la ligne de communication (13) ;
   - détecter (61) au moins un extremum local (55a, 55b) de la valeur mesurée (SNR) ; et de
   - classer (73) l'au moins un extremum local (55a, 55b) ;

   dans lequel le classement (73) comprend l'attribution (71) d'un type de dégradation de la ligne de communication (13) à l'extremum local (55a, 55b) sur la base d'une comparaison (67, 69) de la valeur mesurée (SNR) du paramètre dépendant de la fréquence avec au moins une valeur estimée ($SNR_{estBT}$, $SNR_{estRFI}$) du paramètre, **caractérisé en ce que** le dispositif (43) permet de déterminer (67, 69) la valeur estimée ($SNR_{estBT}$, $SNR_{estRFI}$) sur la base d'un modèle mathématique ($M_{BT}$, $M_{RFI}$) du paramètre supposant la présence d'un type de dégradation prédéfini (45, 47) de la ligne de communication (13).

**13.** Dispositif (25, 31, 43) selon la revendication 12, dans lequel le dispositif (25, 31, 43) permet d'exécuter un procédé (57) selon l'une des revendications 1 à 11.

**14.** Poste de contrôle (39) pour analyser une ligne de communication (13), le poste de contrôle (39) comprenant un dispositif (43) selon l'une des revendications 12 et 13.

**15.** Produit de programme informatique, de préférence un support de stockage lisible par un ordinateur (29), le produit de programme informatique comprenant un programme informatique programmé pour exécuter un procédé (57) selon l'une des revendications 1 à 11 lorsqu'il est exécuté sur un ordinateur (25, 31, 43).

**Fig. 1**

BT 100m

**Fig. 2**

**Fig. 3**

**Fig. 4**

**Fig. 5**

Fig. 6

Fig. 7

**EP 2 854 299 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0124492 A1
- US 6970560 B1